# EUROPEAN PATENT APPLICATION

(11) **EP 4 136 982 A1**
(43) Date of publication of application: **22.02.2023**
(21) Application number: 20931257.8
(22) Date of filing: 16.04.2020
(51) Int. Cl.: A23L 7/157, A23L 29/219

(54) **OIL-AND-FAT MODIFIED STARCH, BATTER FOR FRIED FOOD AND METHOD FOR PRODUCING SAME, AND METHOD FOR PRODUCING FRIED FOOD**

(71) Applicant: Nihon Shokuhin Kako Co., Ltd., Tokyo 100-0005 (JP)
(72) Inventor: IGARASHI Nobuhito, Fuji-shi, Shizuoka 417-8530 (JP); HIRANO Misa, Fuji-shi, Shizuoka 417-8530 (JP); KAKINO Akemi, Fuji-shi, Shizuoka 417-8530 (JP); YAMAMOTO Raiki, Fuji-shi, Shizuoka 417-8530 (JP); TAKAGUCHI Hitoshi, Fuji-shi, Shizuoka 417-8530 (JP)
(74) Representative: Dehns
(86) International application number: PCT/JP2020/016726
(87) International publication number: WO 2021/210130

(57) **Abstract**

The present invention provides an oil-and-fat modified starch having excellent performance (texture) when used as a raw material for batter and the like for a fried food. This oil-and-fat modified starch is characterized in that the content of sugar having a degree of polymerization of 1-3 in a sugar composition of the water-soluble fraction of the aqueous suspension is 3-20% by mass. The oil-and-fat modified starch preferably has a solid content concentration of 0.1-5.0% by mass in a supernatant of a 40 mass% water suspension. Also, batter for a fried food according to the present invention is characterized by containing the oil-and-fat modified starch. Furthermore, a method for producing batter for a fried food according to the present invention is characterized in that the oil-and-fat modified starch is added as a raw material of the batter for a fried food. Furthermore, a method for producing a fried food according to the present invention is characterized in that the batter for a fried food is attached to a food ingredient and then fried in oil.

## Description

### TECHNICAL FIELD

The present invention relates to: a novel oil-or-fat processed starch that is suitable as, e.g., a raw ingredient of a coating for fried foods, etc.; a coating for fried foods in which the oil-or-fat processed starch is used; a method for producing a coating for fried foods; and a method for producing fried foods.

### BACKGROUND ART

In oil-or-fat processed starches, an oil or fat is bonded or joined to a starch powder. Such oil-or-fat processed starches are obtained by adding an oil or fat to a starch, mixing the contents, and subjecting the mixture to an aging treatment. Oil-or-fat processed starches can impart a desirable mouthfeel and binding properties when used in a coating for fried foods, and therefore are widely used as raw ingredients of batters or sprinkled powders for fried foods. Additionally, the oil-or-fat processed starches can improve yield and mouthfeel, and therefore are used also in seafood and livestock meat products such as sausages, hamburgers, *hanpen* (*1), *kamaboko* (*2), and *chikuwa* (*3).

A variety of investigations regarding methods for producing oil-or-fat processed starches have been conducted in order to enhance performance (binding properties, mouthfeel, etc.) when oil-or-fat processed starches are used in coatings for fried foods. For example, Patent Document 1 discloses a method for producing an oil-or-fat processed starch, the method involving adding lipoxygenase enzymes and an oil or fat to a starch and then heating and reacting these components. Patent Document 2 discloses a method for producing an oil-or-fat processed starch, the method involving adding a glycerin organic acid fatty acid ester and an oil or fat to a starch. Patent Document 3 discloses a method for producing an oil-or-fat processed starch, the method involving mixing a crushed soy-flour article and an oil or fat into a phosphoric acid cross-linked starch that is treated using phosphorus oxychloride and then heat-treating the resultant mixture. Patent Document 4 discloses a method for producing an oil-or-fat processed starch, the method involving adding oils and fats to a cross-linked starch that has a deposition volume within a given range, mixing the contents, and subjecting the mixture to a heating-decomposition treatment. Patent Document 5 discloses a method for producing an oil-or-fat processed starch, the method involving adding an oil or fat with which an emulsifier is mixed to a starch having a given moisture content, mixing the contents, subsequently adjusting the moisture amount of the mixture, and subjecting the mixture to an aging treatment.

### [Prior Art Documents]

### [Patent Documents]

[Patent Document 1] Japanese Laid-Open Patent Application No. 2000-106832
[Patent Document 2] Japanese Laid-Open Patent Application No. 2005-185122
[Patent Document 3] Japanese Patent No. 4739459
[Patent Document 4] Japanese Laid-Open Patent Application No. 2013-110997
[Patent Document 5] Japanese Patent No. 5265821

### DISCLOSURE OF THE INVENTION

### [Problems the Invention is Intended to Solve]

Although a variety of investigations regarding methods for producing oil-or-fat processed starches have been conducted as described above, there are few reported examples of investigations focused on the composition of the oil-or-fat processed starch, and there are opportunities to conduct further investigations for the purpose of enhancing the performance of such starches.

It is accordingly an object of the present invention to provide, e.g., an oil-or-fat processed starch that has exceptional performance (mouthfeel) when used in a coating for fried foods.

### [Means for Solving the Aforementioned Problems]

As a result of thorough research conducted in order to resolve the aforementioned problems, the inventors perfected the present invention upon discovering that when an oil-or-fat processed starch having a specific sugar composition is used in a coating for fried foods, a fried food that has a coating having an exceptional mouthfeel is obtained.

Specifically, according to one aspect of the present invention, there is provided an oil-or-fat processed starch characterized in that the amount of carbohydrates having a degree of polymerization of 1-3 in the sugar composition of a water-soluble fraction of an aqueous suspension is 3-20 mass%. Using the oil-or-fat processed starch according to the present invention as, e.g., a raw ingredient of a coating for fried foods makes it possible to obtain a fried food that has a coating having a crunchy, light, and crisp mouthfeel.

The solid content concentration of the oil-or-fat processed starch according to the present invention in a supernatant of an aqueous suspension having a concentration of 40 mass% is preferably 0.1-5.0 mass%.

According to another aspect of the present invention, there is provided a coating for fried foods, the coating being characterized by containing the oil-or-fat processed starch described above. Employing the coating for fried foods according to the present invention makes it possible to obtain a fried food that has a coating having a crunchy, light, and crisp mouthfeel.

According to yet another aspect of the present invention, there is provided a fried food product characterized by including the coating for fried foods described above. The fried food product according to the present invention has a coating having a crunchy, light, and crisp mouthfeel.

According to still another aspect of the present invention, there is provided a method for producing a coating for fried foods, the method being characterized in that the oil-or-fat processed starch described above is added as a raw ingredient of a coating for fried foods. Employing the method for producing a coating for fried foods according to the present invention makes it possible to obtain a fried food that has a coating having a crunchy, light, and crisp mouthfeel.

According to yet still another aspect of the present invention, there is provided a method for producing fried foods, the method being characterized in that the coating for fried foods described above is bonded to a main ingredient and then subjected to a oil-heating treatment. Employing the method for producing fried foods according to the present invention makes it possible to obtain a fried food that has a coating having a crunchy, light, and crisp mouthfeel.

### [Effect of the Invention]

According to the present invention, using the oil-or-fat processed starch described above as, e.g., a raw ingredient of a coating for fried foods makes it possible to obtain a fried food that has a coating having a crunchy, light, and crisp mouthfeel.

### BEST MODE FOR CARRYING OUT THE INVENTION

In the oil-or-fat processed starch according to the present invention, an oil or fat is bonded to at least part of the surfaces of starch particles and changes the physical properties of the surfaces of the starch particles. The oil-or-fat processed starch is obtained by adding an oil or fat to a starch, mixing the contents, and subjecting the mixture to an aging treatment at a temperature equal to or greater than normal temperature. This yields starch particles having different properties than particles obtained by merely adding the oil or fat to the starch and mixing the contents. Specifically, bonding the oil or fat to at least part of the surfaces of the starch particles makes it possible to make the surfaces of the starch particles hydrophobic and, for example, to raise the affinity between the starch particles and a protein.

There is no particular limitation as to the starch serving as the raw ingredient of the oil-or-fat processed starch according to the present invention, provided that the starch can be used for food. Examples of the starch include corn starch, tapioca starch, rice starch, wheat starch, potato starch, sweet potato starch, mung bean starch, dogtooth-violet starch, kudzu starch, bracken starch, sago starch, and Japanese cardiocrinum starch. Among these starches, tapioca starch and/or corn starch is preferred from the standpoint of cost and effect, and tapioca starch is particularly preferred. In addition to normal starches, it is also permissible to use starch variants that are enhanced through thremmatological or genetic-engineering procedures, such as non-glutinous, waxy, or high-amylose variants of any of the aforementioned starches.

Furthermore, in the present invention, a variety of processed starches can be used as the starch serving as a raw ingredient. Specifically, it is permissible to use a starch that has been subjected to: a chemical modification treatment such as oxidation, esterification, etherification, or crosslinking; a processing treatment such as gelatinization, granulation, moist-heat treatment, ball-mill treatment, pulverization, heating, moistening, hot-water treatment, bleaching, sterilization, acid treatment, alkali treatment, or enzyme treatment; or any two or more of the aforementioned treatments. Among starches subjected to these processes, it is preferable to use cross-linked starches, and particularly preferable to use phosphoric acid cross-linked starches, when using the oil-or-fat processed starch in a coating for fried foods.

Examples of the oil or fat used in the oil-or-fat processed starch according to the present invention include: oils and fats, as well as formulated oils, that are recognized as being edible; and mixtures thereof. Specifically, examples of the oil or fat include: linseed oil, perilla oil, walnut oil, safflower oil, sunflower oil, grape oil, soybean oil, corn oil, cottonseed oil, sesame oil, rapeseed oil, peanut oil, olive oil, palm oil, coconut oil, beef tallow, lard, chicken fat, mutton tallow, whale oil, and fish oil; and processed oils and fats such as fractionated oils, deodorized oils, heated oils, and transesterified oils of the aforementioned oils and fats. From the standpoint of the performance of the oil-or-fat processed starch, it is preferable to use perilla oil or safflower oil. The oils and fats described above may be used alone, or a plurality thereof may be used in combination.

The amount of oil or fat added to the starch when obtaining the oil-or-fat processed starch according to the present invention is preferably 0.01-5 parts by mass, and more preferably 0.03-2 parts by mass, per 100 parts by mass of the starch. When the amount of oil or fat added to the starch is less than 0.01 parts by mass, the oil or fat will not adequately bond to the surfaces of the starch particles and an effect for improving the characteristics of the starch will tend to deteriorate. Conversely, when the amount of oil or fat added to the starch exceeds 5 parts by mass relative to the amount of starch, the powder fluidity of the starch and the operability will tend to worsen, and, *inter alia,* an odor of the oil or fat will tend to strengthen and adversely affect the flavor of the resultant food product.

There is no particular limitation as to the method for adding the oil or fat to the starch, provided that the oil or fat can be dispersed in the starch. It is possible to use normal methods such as ordinary stir-mixing, airflow-mixing, or spray-atomization.

An emulsifier may also be added to the starch together with the oil or fat when obtaining the oil-or-fat processed starch according to the present invention. Examples of the emulsifier include glycerine fatty acid esters, polyglycerine fatty acid esters, organic acid monoglycerides, sorbitan fatty acid esters, propylene glycol fatty acid esters, sucrose fatty acid esters, and lecithin. These emulsifiers may also be added in combination. When the emulsifier is added, the amount thereof is preferably 10-1,000 parts by mass, and more preferably 20-500 parts by mass, per 100 parts by mass of the oil or fat.

The aging treatment can be carried out by subjecting a mixture of the starch, the oil or fat, and other raw ingredients such as the emulsifier (as needed) to a fixed-period treatment at a temperature equal to or greater than normal temperature (10°C, preferably 15°C) in a state in which the mixture has been introduced into a variety of reactors, extruders, dryers, tanks, containers, packaging, etc. The aforementioned treatment will proceed, provided that the temperature is equal to or greater than normal temperature, the time required for aging being lower at higher temperatures. Specifically, it is possible to implement the aging treatment by allowing the mixture to stand at a temperature equal to or greater than normal temperature, and it is also possible to implement the aging treatment (heating aging treatment) at a higher temperature and in a shorter time by heating the mixture. In the aging treatment, it is necessary to set conditions such that excessive decomposition of the raw-ingredient starch does not occur. The aging temperature in this case is preferably 30-180°C, and more preferably 50-160°C. The aging time may shorten as the temperature increases, but is preferably 30 minutes to two months, and more preferably one hour to one month.

As described above, the oil-or-fat processed starch according to the present invention is obtained by adding the oil or fat to the starch, mixing the contents, and subjecting the mixture to the aging treatment at a temperature equal to or greater than normal temperature. However, provided that an oil-or-fat processed starch having a desired sugar composition (in which the amount of carbohydrates having a degree of polymerization of 1-3 is 3-20 mass%) that shall be described later is obtained, there is no particular limitation as to incorporating other treatments or conditions aside from "adding the oil or fat to the starch, mixing the contents, and subjecting the mixture to the aging treatment at a temperature equal to or greater than normal temperature."

For example, adding carbohydrates having a degree of polymerization of 1-3 to the oil-or-fat processed starch enables formulation such that an oil-or-fat processed starch having the desired sugar composition is obtained. When carbohydrates are thus added, there is no particular limitation as to the timing at which the carbohydrates are added. The carbohydrates may be added before the oil or fat is mixed into the raw-ingredient starch, may be added after the oil or fat is mixed into the raw-ingredient starch but before the aging treatment is implemented, or may be added after the aging treatment is implemented.

Additionally, carrying out the aging treatment under, e.g., harsh conditions in which hydrolysis of the starch readily occurs (i.e., at high temperature and for an extended time) enables formulation such that an oil-or-fat processed starch having the desired sugar composition is obtained. Carrying out the aging treatment under such harsh conditions allows hydrolysis of the starch to advance to a remarkable degree, which makes it possible for the amount of carbohydrates having a degree of polymerization of 1-3 within the oil-or-fat processed starch to be set within the desired range.

Furthermore, carrying out the aging treatment under, e.g., low-pH conditions such that hydrolysis of the starch readily occurs (i.e., under acidic conditions) enables formulation such that an oil-or-fat processed starch having the desired sugar composition is obtained. Adding an acid, etc., and carrying out the aging treatment under low-pH conditions allows hydrolysis of the starch to advance to a remarkable degree, which makes it possible for the amount of carbohydrates having a degree of polymerization of 1-3 within the oil-or-fat processed starch to be set within the desired range.

Additionally, carrying out the aging treatment using, e.g., machinery such as a kneader, stirring dryer, rotary kiln, or extruder makes it possible to further promote hydrolysis of the starch. When the aging treatment is carried out using the aforementioned machinery, heat exchange occurs more rapidly than in a case in which the aging treatment is carried out in a standing state using a shelf-type dryer, thermostatic chamber, tank, etc., and hydrolysis of the starch therefore advances more readily.

However, because the oil-or-fat processed starch according to the present invention cannot exhibit the preferred effect if the amount of carbohydrates having a degree of polymerization of 1-3 exceeds the desired range, it is necessary to adjust a variety of conditions so that post-hydrolysis carbohydrates are not excessively present. The extent to which hydrolysis advances differs depending on various properties of the starch. For example, hydrolysis advances more readily at higher moisture content, and advances less readily in starches that do not as readily swell (cross-linked starches, etc.). Specifically, when setting the amount of carbohydrates having a degree of polymerization of 1-3 in the oil-or-fat processed starch to within the desired range using the aging treatment, the temperature, time, pH, apparatuses used, and other heating conditions (aging treatment conditions) are to be set, as appropriate, in consideration of various properties of the oil-or-fat processed starch (including moisture content, type of raw-ingredient starch used, extent to which functional groups added to the starch are substituted due to chemical modification, etc.).

Additionally, provided that an oil-or-fat processed starch having a desired solid content concentration, in a solvent, of water-soluble carbohydrates that shall be described later is obtained, there is no particular limitation as to incorporating other treatments or conditions aside from "adding the oil or fat to the starch, mixing the contents, and then subjecting the mixture to the aging treatment at a temperature equal to or greater than normal temperature," and such incorporation can be adjusted in the same manner as described above.

The amount of carbohydrates having a degree of polymerization (DP) of 1-3 in the sugar composition of a water-soluble fraction of an aqueous suspension of the oil-or-fat processed starch according to the present invention is 3-20 mass%, preferably 3.5-19 mass%, and more preferably 4-18 mass%. If the amount of carbohydrates having a DP of 1-3 is outside of the aforementioned range, then when the oil-or-fat processed starch is used in a coating for fried foods, it will be harder to discern lightness in the mouthfeel of the coating or crispness will be compromised.

There is no particular limitation as to the water in which the oil-or-fat processed starch is suspended. Tap water, spring water, purified water, distilled water, ion-exchanged water, pure water, milli-Q water or other ultrapure water, etc., can be given by way of example as the aforementioned water.

The "amount of carbohydrates having a DP of 1-3 in the sugar composition of a water-soluble fraction of a suspension" in the present description indicates the amount of carbohydrates having a specific DP (i.e., a DP of 1-3) among water-soluble carbohydrates within the oil-or-fat processed starch. This amount can be analyzed using, as one example, the procedure described below.

In the present description, the "sugar composition" is the proportion (in mass%) of specific carbohydrates among all carbohydrates in high-performance liquid chromatography (HPLC) analysis of a sample. The sugar composition is calculated based on the peak area ratio of components in the HPLC analysis. As indicated in the examples that shall be described later, in the HPLC analysis, peaks for components other than sugar thermolysis products, the oil or fat, the emulsifier, and other sugars that are considered to be additives, etc., are excluded from the calculation of the sugar composition.

### (Method for analyzing amount of specific-polymerization-degree carbohydrates among water-soluble carbohydrates within oil-or-fat processed starch (one example))

0.6 g of a starch sample is introduced into a 2.0-mL microcentrifuge tube, 1.2 mL of ultrapure water (at 15-25°C) is added thereto, and the contents of the microcentrifuge tube are stirred well using a vortex. The contents are centrifuged for one minute at 5,600×g using a desktop-sized centrifuge. A supernatant is then transferred to a 1.5-mL microcentrifuge tube, a desalination treatment is carried out using an ion-exchange resin, and the resultant liquid is filtered using a 0.45-µm filter, after which HPLC analysis is conducted under the conditions indicated below.

### HPLC conditions:

Column: Aminex HPX-42A (Bio-Rad)
Column temperature: 75°C
Flow rate: 0.5 mL/min
Eluate: Ultrapure water
Detector: Differential refractive index detector

The amount of carbohydrates having a DP of 1-3 in the sugar composition of a water-soluble fraction of a suspension of the oil-or-fat processed starch according to the present invention is to be 3-20 mass%. For example, the amount of carbohydrates having a DP of 1 in said sugar composition can be set to 0.1-10 mass%, preferably 0.2-5 mass%. Similarly, the amount of carbohydrates having a DP of 2 in said sugar composition can be set to 0.1-15 mass%, preferably 0.5-10 mass%, and more preferably 1-8 mass%. Moreover, the amount of carbohydrates having a DP of 3 in said sugar composition can be set to 0.1-15 mass%, preferably 0.5-12 mass%, and more preferably 1-10 mass%.

The solid content concentration of the oil-or-fat processed starch according to the present invention in a supernatant of an aqueous suspension having a concentration of 40 mass% is preferably 0.1-5.0 mass%, more preferably 0.3-5.0 mass%, and even more preferably 0.45-4.0 mass%. When the solid content concentration is less than 0.1 mass%, a fried coating having poor crispness will tend to be produced. Conversely, when the solid content concentration exceeds 5.0 mass%, a fried coating having a moist mouthfeel with no perceptible lightness will tend to be produced. Thus, the oil-or-fat processed starch according to the present invention can exhibit a particularly advantageous effect when a given amount of water-soluble carbohydrates are included and the sugar composition of the water-soluble carbohydrates is within a given range.

The "solid content concentration... in a supernatant of an aqueous suspension" in the present description indicates the solid content concentration, in a solvent, of the water-soluble carbohydrates within the oil-or-fat processed starch. This concentration can be analyzed using, as one specific example, the procedure described below.

### (Solid content concentration, in solvent, of water-soluble carbohydrates within oil-or-fat processed starch)

Ultrapure water (at 15-25°C) is added to a starch sample to formulate an aqueous suspension having a concentration of 40 mass%, and the aqueous suspension is mixed for one minute using a stirring rod. Next, the combination is centrifuged (for 20 minutes at 2,000×g), a supernatant is recovered before again being centrifuged (for 20 minutes at 2,000×g), and the supernatant is again recovered. The mass of the resultant supernatant and the mass of the solid content (water-soluble carbohydrates) obtained by drying the supernatant are measured, and the solid content concentration (%) in the supernatant is calculated.

The solid content concentration in the supernatant of the aqueous suspension of the oil-or-fat processed starch can be adjusted by adding the water-soluble carbohydrates to the oil-or-fat processed starch as described above or by altering the conditions of the aging treatment.

The oil-or-fat processed starch according to the present invention can be used by being blended with a variety of food products. There is no particular limitation as to the type of food products in which the oil-or-fat processed starch is used. For example, the oil-or-fat processed starch can be used as a raw ingredient of a coating for fried foods, and specifically can be used as a raw ingredient of a coating such as batter or dusting flour.

The amount of the oil-or-fat processed starch according to the present invention that is added to the food product is to be set, as appropriate, in accordance with the type of food product. In the case of a coating for fried foods, the oil-or-fat processed starch can be blended into the coating for fried foods in an amount of 0.1-100 mass%, preferably 1-100 mass%, and more preferably 2-50 mass%. Setting the blending amount of the oil-or-fat processed starch to within this range makes it possible to obtain a fried food that has a coating having a crunchy, light, and crisp mouthfeel.

It is also permissible to blend components other than the oil-or-fat processed starch according to the present invention into the coating for fried foods, examples of such components including: wheat flour, corn flour, soy flour, and other flours; starches; leavening agents; whole eggs, egg whites, and other forms of eggs, or processed goods thereof; emulsifiers; thickeners; salt; saccharides; and spices.

The method for producing fried foods according to the present invention is characterized in that the aforementioned coating for fried foods is bonded to a main ingredient and then subjected to a deep-frying treatment.

Examples of a fried food product obtained using this coating for fried foods include *kara-age* (*4), tempura, *tatsuta-age* (*5), fried chicken, chicken cutlets, pork cutlets, beef cutlets, minced-meat cutlets, croquettes, fried shrimp, rings of fried squid, and fritters.

The fried food product in the present invention is not limited to being oil-heated, but rather may be a so-called non-fried food product obtained through cooking with heat using a frying pan, microwave oven, oven, oven range, convection oven, etc. As per the examples that shall be described later, using the oil-or-fat processed starch according to the present invention in a coating for fried foods makes it possible to obtain fried foods having a crunchy and light mouthfeel.

The oil-or-fat processed starch according to the present invention can furthermore be suitably used in surimi of seafood and livestock meat products (*6) (ham, chicken nuggets, sausages, hamburgers, meatballs, *gyoza,* steamed dumplings, cabbage rolls, *kamaboko, satsuma-age* (*7), *hanpen,* fish dumplings, fish sausages, *chikuwa,* etc.), processed meat products (ham, bacon, steak, roast beef, etc.), noodles, breads, and other food products.

The details of the mechanism by which the effect of the oil-or-fat processed starch according to the present invention is exhibited are unclear. However, it is thought that when the amount of carbohydrates having a DP of 1-3 in the sugar composition of a water-soluble fraction of an aqueous suspension of the oil-or-fat processed starch exceeds 20 mass%, the crispness of a fried coating worsens due to an increase in absorbency caused by carbohydrates having a low molecular weight. It is also thought that when the amount of carbohydrates having a DP of 1-3 in the sugar composition of a water-soluble fraction of an aqueous suspension of the oil-or-fat processed starch is less than 3 mass%, the starchiness, which indicates the water retention properties of the fried coating, increases and the crispness of the fried coating worsens due to carbohydrates having a high molecular weight. However, this mechanism is ultimately conjecture, and the present invention is in no way limited to the mechanism described above.

### [Examples]

Examples are given below to elucidate the details of the present invention, but the present invention is in no way limited to the examples below.

### 1. Formulation of oil-or-fat processed starch and analysis thereof

### (1) Formulation of oil-or-fat processed starch

### (Sample 1)

Water was added to tapioca starch to produce a slurry containing 30-40 mass% of tapioca starch. The slurry was then warmed to 30°C, after which 2 parts by mass of sodium sulfate was dissolved in 100 parts by mass of the tapioca starch in terms of dry mass. Sodium hydroxide was then added to adjust the pH to 11-12, after which 0.05 parts by mass of phosphoryl chloride was added to 100 parts by mass of the starch in terms of dry mass, and a reaction was carried out for one hour. Next, sulfuric acid was added to adjust the pH to 5-6, after which the starch was rinsed, dehydrated, and dried to obtain phosphoric acid cross-linked tapioca. 0.1 part of safflower oil was added to 100 parts of the resultant phosphoric acid cross-linked tapioca and these components were uniformly mixed using a mortar to obtain a mixture. The mixture was heated at 150°C for two hours in a kneader to formulate sample 1.

### (Sample 2)

5 parts by mass of commercially available dextrin (product name: TK-16, made by Matsutani Chemical Industry Co., Ltd.) was added to 95 parts by mass of a commercially available oil-or-fat processed starch in which phosphoric acid cross-linked tapioca was used as a raw-ingredient starch (product name: Nisshoku batter starch #500, made by Nihon Shokuhin Kako Co., Ltd.), and the contents were mixed, to formulate sample 2.

### (Sample 3)

Water was added to phosphoric acid cross-linked tapioca obtained using the same operation as for sample 1 to produce a slurry containing 30-40 mass% of the phosphoric acid cross-linked tapioca. Sulfuric acid was added to the slurry to adjust the pH to 2, after which the slurry was dehydrated and dried. 0.1 part of safflower oil was then added, the components were uniformly mixed using a mortar, and an aging treatment was implemented for one week at 25°C in an air bath to formulate sample 3.

### (Sample 4)

An aging treatment was implemented for seven hours at 150°C using an air bath on a commercially available oil-or-fat processed starch in which acetylated tapioca was used as a raw-ingredient starch (product name: *Nerikomi denpun* K-1 (*8), made by Nihon Shokuhin Kako Co., Ltd.) to formulate sample 4.

### (Sample 5)

A commercially available oil-or-fat processed starch in which phosphoric acid cross-linked tapioca as a raw-ingredient starch (product name: Nisshoku batter starch #500, made by Nihon Shokuhin Kako Co., Ltd.) was used.

### (Sample 6)

0.1 part of safflower oil was added to phosphoric acid cross-linked tapioca obtained using the same operation as for sample 1, the components were uniformly mixed using a mortar, and an aging treatment was implemented for one week at 25°C in an air bath.

### (Sample 7)

A commercially available oil-or-fat processed starch in which acetylated tapioca as a raw-ingredient material (product name: *Nerikomi denpun* K-1 (*8), made by Nihon Shokuhin Kako Co., Ltd.) was used.

### (Sample 8)

Sample HDS5 in example 2 of Japanese Laid-Open Patent Application No. 2013-110997 was reproduced in compliance with the disclosures in said document to formulate sample 8.

### (2) Analysis of sugar composition of water-soluble fraction of aqueous suspension in each sample

0.6 g of each of the samples was introduced into a 2.0-mL microcentrifuge tube, 1.2 mL of ultrapure water (at 20°C) was added thereto, and the contents of the microcentrifuge tube were stirred well using a vortex. The contents were centrifuged for one minute at 5,600×g using a desktop-sized centrifuge. A supernatant was then transferred to a 1.5-mL microcentrifuge tube, a desalination treatment was carried out using an ion-exchange resin, and the resultant liquid was filtered using a 0.45-µm filter, after which HPLC analysis was conducted under the conditions indicated below.

### (HPLC conditions)

Column: Aminex HPX-42A (Bio-Rad)
Column temperature: 75°C
Flow rate: 0.5 mL/min
Eluate: Ultrapure water
Detector: Differential refractive index detector

The sugar composition for each of the samples (based on the peak area ratio of each of the components) was derived. The results are shown in table 1.

**[Table 1]**

| | Sugar composition (mass%) | | | | | | | Total of DP 1-3 (mass%) |
|---|---|---|---|---|---|---|---|---|
| | DP 1 | DP 2 | DP 3 | DP 4 | DP 5 | DP 6 | DP 7 or higher | |
| Sample 1 | 1.3 | 2.8 | 3.0 | 3.1 | 2.9 | 3.3 | 83.6 | 7.1 |
| Sample 2 | 3.2 | 5.6 | 7.7 | 5.9 | 5.5 | 11.0 | 61.1 | 16.5 |
| Sample 3 | 2.3 | 3.9 | 4.5 | 4.4 | 3.9 | 3.6 | 77.4 | 10.7 |
| Sample 4 | 0.4 | 1.8 | 2.3 | 2.5 | 2.6 | 2.8 | 87.6 | 4.5 |
| Sample 5 | 19.7 | 0 | 2.3 | 2.0 | 3.4 | 2.1 | 70.5 | 22.0 |
| Sample 6 | 2.0 | 0 | 0 | 0.4 | 0 | 0 | 97.6 | 2.0 |
| Sample 7 | 0 | 0 | 0 | 10.8 | 9.5 | 0 | 79.7 | 0.0 |
| Sample 8 | 0 | 0 | 0 | 0 | 6.7 | 6.1 | 87.2 | 0.0 |

| | | | | | | | | |
|---|---|---|---|---|---|---|---|---|
| DP: Degree of polymerization | | | | | | | | |

### (3) Analysis of total amount of water-soluble carbohydrates in each sample

15 g of each of the samples and 22.5 g of ultrapure water (at 20°C) were introduced into a 50-mL conical tube, and the contents of the conical tube were mixed for one minute using a stirring rod (because samples 1, 2, 5, and 6 had a high slurry viscosity, the contents were mixed using 50 g of the starch sample and 75 g of ultrapure water by using a 200-mL beaker). Next, the combination was centrifuged (at 2,000×g for 20 minutes), the supernatant was recovered to a 15-mL conical tube, the supernatant was again centrifuged (at 2,000×g for 20 minutes), and the resultant supernatant was again recovered to the conical tube. The mass of the resultant supernatant and the mass of the solid content (water-soluble carbohydrates) obtained by drying the supernatant were measured, and the solid content concentration (%) in the supernatant was calculated.

The results are shown in table 2.

**[Table 2]**

| | Supernatant mass (g) | Solid content mass (g) | Solid content concentration (mass%) |
|---|---|---|---|
| Sample 1 | 9.37 | 0.04 | 0.43 |
| Sample 2 | 5.13 | 0.19 | 3.70 |
| Sample 3 | 9.41 | 0.08 | 0.85 |
| Sample 4 | 7.72 | 0.04 | 0.52 |
| Sample 5 | 4.31 | 0.01 | 0.23 |
| Sample 6 | 10.48 | 0.01 | 0.10 |
| Sample 7 | 11.05 | 0.01 | 0.09 |
| Sample 8 | 6.89 | 0.02 | 0.29 |

### 2. Experiments regarding coating for fried foods

### (1) Formulation of tempura

*Kamaboko* (*Mamekama shiro* (*8), made by Ichimasa Kamaboko Co., Ltd.) that was sliced to a thickness of 10 mm was used as a main ingredient of a fried food. A batter was formulated by adding 45 parts by mass of pastry flour, 1 part by mass of salt, 1 part by mass of monosodium glutamate, 0.4 part by mass of a polysaccharide thickener, and 120 parts by mass of ice-chilled water to 40 parts by mass of samples 1-8 (in terms of dry mass) and then mixing and stirring these components. The batter was bonded to the *kamaboko* so as to reach a relative quantity of 40-45 mass%, fried for one minute at 175°C, allowed to cool, and then quick-frozen. The fried food was again fried for three minutes at 175°C to formulate tempura.

### (2) Evaluation of mouthfeel (lightness)

The mouthfeel of the tempura was evaluated immediately after frying. In the criteria for evaluating the mouthfeel, tempura exhibiting a light mouthfeel (i.e., a mouthfeel in which no oiliness or moistness is perceptible, and which easily breaks under low force and yields an excellent melt-in-the-mouth sensation) was evaluated as being excellent. The evaluation criteria are as indicated below.
1: Lightness is not at all perceptible (coating has very strong oiliness, or is hard and yields a poor melt-in-the-mouth sensation)
2: Lightness is substantially not perceptible
3: Lightness is somewhat perceptible
4: Lightness is moderately perceptible
5: Lightness is strongly perceptible (coating has no perceptible oiliness, is soft, easily breaks, and yields an excellent melt-in-the-mouth sensation)

The results of a sensory evaluation in which the mouthfeel was evaluated by four panel experts and the average of scores assigned by the panel experts were calculated are shown in table 3. Evaluations for which the average score is equal to or less than 2.0 were deemed not to have met the desired criteria.

### (3) Evaluation of mouthfeel (crispness)

With regard to the crispness of the tempura (a mouthfeel in which the coating does not adhere to the teeth, and in which rubber-like elasticity is low) as well, tempura exhibiting excellent crispness was evaluated as being excellent. The evaluation criteria are as indicated below.
×: Very poor crispness (springy and adheres to teeth)
△: Poor crispness
∘: Excellent crispness
⊚: Very excellent crispness (not springy, teeth readily bite into coating)

The results of a sensory evaluation in which the mouthfeel was evaluated by four panel experts and evaluations were finally determined upon consultation between the panel experts are shown in table 3. Evaluations of × and △ were deemed not to have met the desired criteria.

**[Table 3]**

| | Lightness | Crispness | Comments |
|---|---|---|---|
| Sample 1 | 3.0 | ○ | Light, soft, crunchy |
| Sample 2 | 3.5 | ⊚ | Light, crunchy, excellent melt-in-the-mouth sensation |
| Sample 3 | 4.3 | ⊚ | Very light, crunchy, excellent melt-in-the-mouth sensation |
| Sample 4 | 2.8 | ⊚ | Light, crunchy, excellent crispness |
| Sample 5 | 0.0 | × | Hard, poor crispness |
| Sample 6 | 1.0 | × | Poor crispness, poor melt-in-the-mouth sensation |
| Sample 7 | 2.0 | Δ | Poor crispness, strong perception of oiliness |
| Sample 8 | 0.5 | × | Hard, very poor crispness |

## Claims

1. An oil-or-fat processed starch **characterized in that** the amount of carbohydrates having a degree of polymerization of 1-3 in a sugar composition of a water-soluble fraction of an aqueous suspension is 3-20 mass%.

2. The oil-or-fat processed starch according to claim 1, wherein the solid content concentration of the oil-or-fat processed starch in a supernatant of an aqueous suspension having a concentration of 40 mass% is 0.1-5.0 mass%.

3. A coating for fried foods, the coating being **characterized by** containing the oil-or-fat processed starch according to claim 1 or 2.

4. A method for producing a coating for fried foods, the method being **characterized in that** the oil-or-fat processed starch according to claim 1 or 2 is added as a raw ingredient of a coating for fried foods.

5. A method for producing fried foods, the method being **characterized in that** the coating for fried foods according to claim 3 is bonded to a main ingredient and then subjected to an oil-heating treatment.
